Europäisches Patentamt

(19) European Patent Office    (11) Publication number:    **0 045 481**

Office européen des brevets    **A1**

(12) **EUROPEAN PATENT APPLICATION**

(21) Application number: **81105969.0**    (51) Int. Cl.³: **F 24 D 11/00**

(22) Date of filing: **29.07.81**

(30) Priority: **04.08.80 IT 4161180**
**22.05.81 IT 3069781 U**

(43) Date of publication of application:
**10.02.82 Bulletin 82/6**

(84) Designated Contracting States:
**AT BE CH DE FR GB LI NL SE**

(71) Applicant: **Finzi Contini, Bruno**
**Viale Raffaello Sanzio, 36**
**I-34128 Trieste(IT)**

(72) Inventor: **Finzi Contini, Bruno**
**Viale Raffaello Sanzio, 36**
**I-34128 Trieste(IT)**

(74) Representative: **Modiano, Guido et al,**
**MODIANO & ASSOCIATI S.A.S. Via Meravigli, 16**
**I-20123 Milan(IT)**

(54) **Fluid-operated thermal accumulator of the labyrinth type.**

(57) The thermal accumulator comprises a reservoir (1) filled with a fluid and thermally insulated, and at least a partition (12) dividing the interior of the reservoir (1) to provide a confined path (13) for the upflowing liquid as well as to inhibit the fluid convective and stirring movements while retaining a condition of thermal lamination of the fluid. The partitioned reservoir (1) is in turn connected to a utilization circuit (3) in such a manner that the fluid is picked up from the upper portion of the reservoir (1) and to a heating circuit (2) provided with a heat source (4) and withdrawing cold fluid from the reservoir bottom and reintroducing the withdrawn fluid into the reservoir top subsequently to the heating thereof.

Fig 1

EP 0 045 481 A1

COMPLETE DOCUMENT

This invention relates to a fluid-operated thermal accumulator of the labyrinth type.

In the field of so-called alternative sources of thermal energy, it is well known that a most frequently encountered difficulty is the presence of two practically cyclical output and operation diagrams for the thermal energy, which differ considerably from each other both in pattern and phase. A typical instance is represented by installations which utilize solar panels, only capable of generating thermal energy while exposed to direct sun radiation, whereas the demand must be met at any time of the day and night. If, for example, the energy output is utilized to supply heat to a building, then the demand may exhibit a diagram of scarcely variable pattern but having maxima and minima which follow a different pattern from the energy generation one, depending on the sun radiation hours over a day time of twentyfour hours.

In that typical case, as well as in several others, it thus becomes necessary to make a heat accumulator available which can operate as a thermal flywheel for storing heat during the time when the latter is available in excess over the demand and subsequently delivering it as and when required by the user(s).

It should be noted that such an accumulator must be capable of storing and retaining the heat over extremely variable periods of time, which may go from a few hours to one week and longer.

In consideration of the cited problems, it is a primary object of this invention to provide a thermal accumulator which is capable of efficiently storing the heat delivered by a primary source, such as a solar collector set.

Another object of the invention is to provide a thermal accumulator so constructed that it enables the working fluid circulated therethrough to absorb heat in an uneven or disuniform manner and to undergo a thermal lamination effective to allow its extraction at an always high temperature.

A further object of this invention is to provide an accumulator as indicated, the construction whereof both facilitates the thermal exchange between the primary fluid and the working fluid, and the thermal lamination of the working fluid.

A not unimportant object of the invention is to provide a thermal accumulator of low cost and high performance.

According to the invention, these objects are achieved by a thermal accumulator the construction whereof is such as to, on one hand, inhibit the convective movements of the fluid it contains, and on the other hand, permanently maintain a separation between the hot and cold areas of the fluid, such as to enable, upon request, the withdrawal but of hot fluid, to the full exhaustion of the latter.

The thermal accumulator according to the invention comprises, similarly to other accumulators of the same general type, a thermally highly insulated reservoir, and is characterized in that it further comprises at least one partition dividing the interior thereof such as to create a confined path for the upflowing fluid and simultaneously inhibit the convective and stirring movements in said fluid, thus maintaining a condition of thermal lamination therein. The thusly partitioned reservoir is in turn connected to a utilization circuit, whereby the fluid is picked up from the upper portion of the reservoir and reintroduced into the lower portion thereof, as well as to a heating circuit associated with a heat source, whereby the heating circuit picks up cold fluid from the lower portion of the reservoir and reintroduces the picked-up fluid, after heating it, into the upper portion of the reservoir.

According to a first preferred embodiment of the invention, the utilization circuit and heating circuit communicate directly together via the reservoir. It will be appreciated, therefore, that when the heating and utilization circuits are both operated at the same time, the heated fluid reintroduced into the vessel from the heating circuit is immediately picked up by the utilization circuit without having to flow through the reservoir, thereby the cooled fluid reintroduced into the reservoir from the utilization circuit is immediately picked up by the heating circuit without flowing through the reservoir. The latter is thus bypassed, which of course increases the overall energy output considerably.

According to a second embodiment of the invention, the utilization circuit communicates directly with the reservoir, whereas the heating circuit can only go through the latter. The reservoir, the interior whereof is divided into superimposed layers by a plurality of partitions, is connected to a utilization circuit which picks up the hot fluid contained in the upper portion of the reservoir and reintroduces the spent fluid into the lower portion thereof. The reservoir also comprises a pipe coil penetrating each superimposed layer and defining a continuous passageway extending perpendicularly to the path followed by the working fluid. This pipe coil is associated with a heat source, in cooperation with which it defines a heating circuit wherethrough a primary fluid is circulated which differs from the working fluid. Said primary fluid flows through the pipe coil which penetrates each of said layers in the reservoir and heats them. In this case, the working fluid which flows up the reservoir is gradually heated by each layer until it reaches its highest temperature at the reservoir top, i.e. where it is picked up for utilization.

Further features and advantages of the invention will be more clearly understood from the following detailed description of some preferred embodiments thereof, given herein by way of example and not of limitation, and being illustrated in the accompanying drawings, where:

Figure 1 is a sectional view of a first embodiment of an accumulator according to the invention;

Figure 2 shows a first variation of the type of accumulator illustrated in Figure 1;

Figure 3 shows a second variation of the type of accumulator illustrated in Figure 1;

Figure 4 is a partly sectional perspective view of a second embodiment of an accumulator according to the invention;

Figure 5 shows a vertical section through the accumulator of Figure 4, evidencing the path of the working fluid;

Figure 6 is a sectional view, taken in a perpendicular plane to that of Figure 5, evidencing the path of the primary fluid;

Figures 7, 8 and 9 illustrate three suitable types of a pipe for use in the exchange circuit of the accumulator of Figure 4;

Figure 10 is a partly sectional perspective view of a variation of the type of accumulator shown in Figure 4, having a partition with a cylindrical helix configuration;

Figure 11 shows a vertical section through a variation of the type of accumulator of Figure 4;

Figure 12 is a sectional view taken along the line IX-IX of Figure 11; and

Figure 13 is a perspective view of the exchange element of the accumulator shown in Figures 11 and 12.

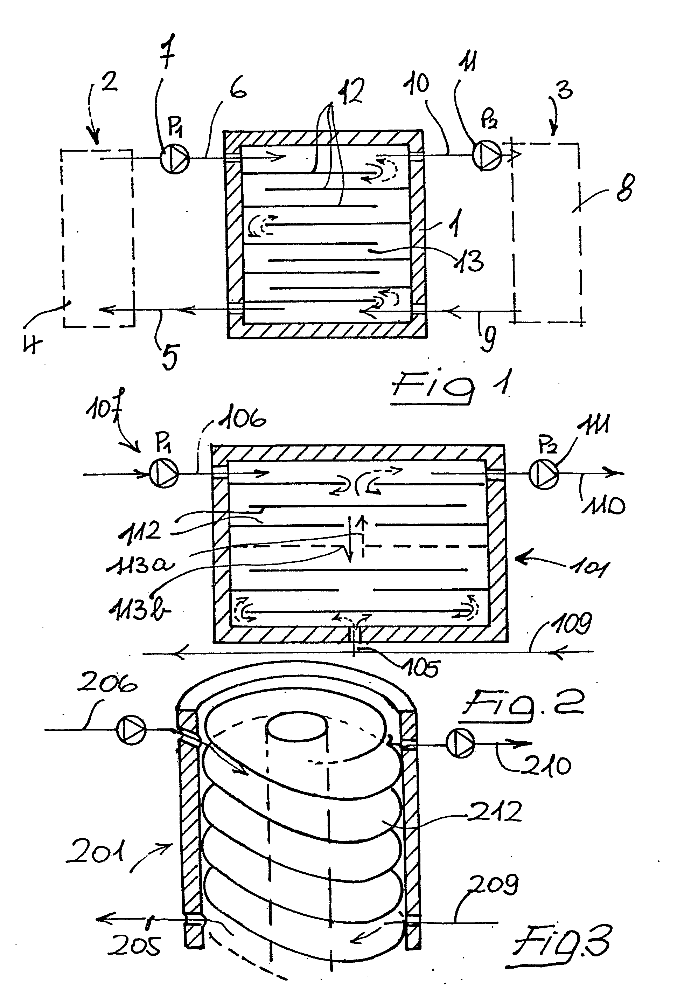

With reference to Figure 1 of the drawings, the embodiment shown therein comprises a thermally highly insulated reservoir 1, whereto two circuits are connected, respectively a fluid heating circuit 2 and a fluid utilization circuit 3.

The circuit 2 includes a heat source 4, which may advantageously comprise a set of solar panels, or any thermal energy recovering device. The fluid which flows through the circuit 2 is picked up from the bottom of the reservoir 1 by means of a line or conduit 5, and is reintroduced into the top of the reservoir 1 through a line or conduit 6 equipped with a first pump 7.

The pump is advantageously of the displacement or variable flow type, and is controlled either by a thermostat responsive to the fluid temperature or by a differential device.

The utilization circuit 3 is connected to a fluid utilization system 8, in accordance with a cycle which may be either of the closed or open type.

In either case, the return of the fluid flowing through the utilization circuit into the reservoir 1 occurs at the reservoir lower portion, over a line or conduit 9, whereas said fluid is picked up from the reservoir upper portion, over a line or conduit 10 including a pump 11.

On the inside of the reservoir 1, there are mounted a plurality of partitions 12, which partly occupy the cross-section of the reservoir 1 and are arranged alternately. Said partitions 12 define an S-like path 13, which creates a lamination within the reservoir and prevents a thorough mixing of the fluid in the reservoir as due to the convective movements and disturbances associated with the admission and withdrawal of fluid.

The operation of this embodiment, as shown in Figure 1, is quite simple. Whenever there is no fluid demand for utilization, the heating circuit 2 will pick up fluid, which may be water, from the vessel bottom and reintroduce it into the vessel top after heating it to a preset temperature.

Owing to the condition of non-mixability prevailing inside the reservoir, it should be noted that in operation, the bottom lamination layers are heated in succession while moving downwards, as the fluid is being heated. Thus, an arbitrary dividing or demarcation line drawn between the hot and cold layers would be a downwardly moving one.

When fluid is withdrawn to meet any utilization requirement , assuming that the amount of fluid withdrawn by the utilization circuit exceeds that being introduced by the heating circuit, the demarcation line, which is considered herein to be the ideal line of separation of cold from hot, will move upwards until the hot fluid has been fully utilized.

All this takes place without permitting any intermixing or stirring movement within the reservoir, which intermixing would otherwise homogenize the overall temperature inside the reservoir to a lower level, thus resulting in a loss of thermal energy.

Figure 2 illustrates a variation of the embodiment shown in Figure 1. This variation comprises an insulated reservoir 101 the interior whereof is subdivided into two parallel pathways 113a and 113b by means of diaphragms 112.

The fluid for the heating circuit is picked up from the reservoir lower portion through a conduit 105, and reintroduced into the upper portion of the reservoir by means of a conduit 106 with the assistance of a pump 107.

The working fluid is in turn picked up through a conduit 110 including a pump 111, and reintroduced through a conduit 109.

Figure 3 shows another variation of the embodiment of Figure 1. This variation comprises a reservoir 201 containing a cylindrical helix 212 serving the same functions as the diaphragms of Figure 2. The heating circuit is connected to this reservoir by means of conduits 205 and 206, the utilization circuit being connected thereto by conduits 209 and 210. These two embodiment variations are quite the equivalent of the one described with reference to Figure 1, with comparable operation characteristics. It will be evident that in practice the reservoirs 1,101,201 are equipped with all the necessary regulating and control devices. It will be equally evident that the materials and dimensions may vary to suit individual requirements.

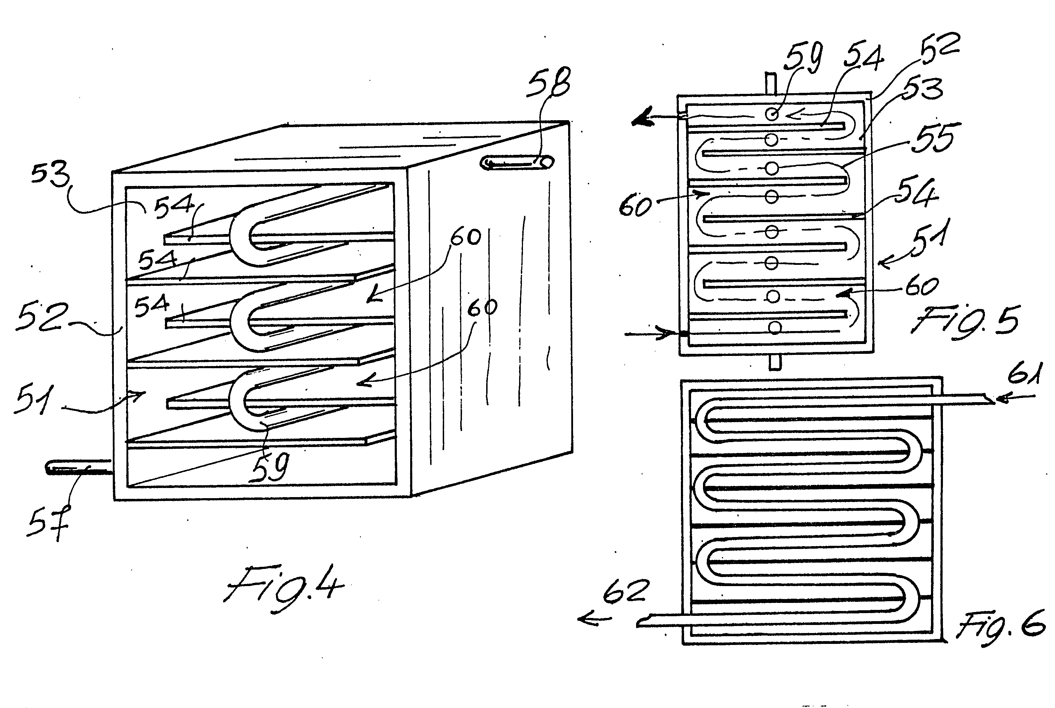

With reference, now, to Figure 4 et seq., the second embodiment of the invention comprises a parallelepipedal reservoir 51, which is suitably insulated by means of a lining 52 of a heat-barring material. The inner chamber 53 of the reservoir 51 is provided with walls in the form of plates 54 of such proportions as to contact three of the peripheral walls and leave an opening toward the fourth wall, their alternate arrangement creating a path composed of a sequence of S-like or snaking portions, said path being indicated by the dash-and-dot line 55 in Figure 5.

The working fluid -- which may be water, since such an accumulator may be advantageously utilized to heat water for sanitary purposes, or to heat rooms, or even other desired industrial purposes -- enters the reservoir through an inlet pipe 57 located at the lowermost portion of the reservoir 51, and leaves it through a second or outlet pipe 58 located at the uppermost portion of the reservoir.

In practice, therefore, there is created within the reservoir 51 a guided ascending flow which ensures that a thermal lamination of the water contained therein is formed. Said flow is produced without allowing any stirring movement which might affect the cited situation of thermal lamination, and thus equalize the temperature levels as with conventional heat storage reservoirs. The water contained in the reservoir is heated by means of a pipe coil 59 which is arranged to go through each of the layers 60 created by two consecutive ones of the plates 54.

Through the pipe coil 59, there is circulated a hot fluid, for example from a set of solar panels not shown, in a direction from top to bottom of the reservoir. Thus, the hot fluid is admitted through an upper port 61, and taken out through a lower port 62. The water contained in the reservoir and that circulated through the pipe coil are accordingly directed to form two crossflows which ensure a higher rate of heat exchange at the upper portion of the reservoir than at the lower one.

When no working water is drawn by the utilization end, the heat from the pipe coil 59 builds up in the reservoir. This build-up takes place in a downward direction, from one layer to the next, as each layer is being heated. Accordingly, it may be concluded that the dividing line between the hot zone and cold zone of the reservoir will move downwards along with said build-up, notwithstanding the effective thermal lamination feature which makes water available at a higher temperature in the upper region of the reservoir than in the lower one. Upon demand for utilization, the water, which is picked up from the reservoir top, always flows out at the highest temperature available, whereas the cold water reintroduced at the reservoir bottom cannot induce internal mixing movements owing to the provision of the plates 54. Thus, the reintroduced water cannot substantially alter the lamination condition, except for the cited dividing line moving accordingly upwards.

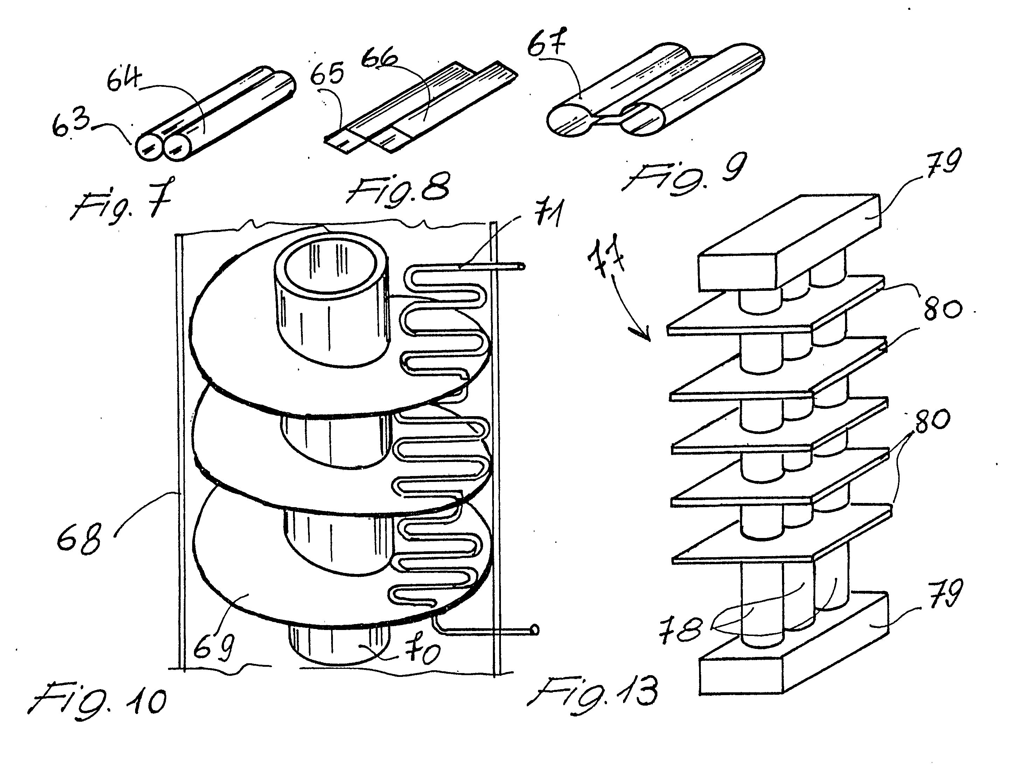

Figures 7,8 and 9 illustrate three different ways of implementing the pipe coil 59. In the first instance, the pipe coil comprises two side-by-side circular pipes 63 and 64. In the second instance, the pipe coil comprises two side-by-side pipes having a rhomboidal cross-sectional configuration 65 and 66. In the third instance, the pipe coil comprises a pipe 67 in the shape of a figure eight. All three of the above approaches are directed to provide the largest surface area of exchange for a given flow of hot fluid passed therethrough.

Figure 10 illustrates a reservoir having a somewhat different construction and comprising a cylindrical body 68, obviously suitably insulated thermally, wherein the path of lamination of the working water is achieved by means of a cylindrical helix 69 which spirals preferably around a central core 70. A pipe coil 71 traverses in a cross pattern the various turns of the helix, through the pipe coil there flowing the hot fluid.

The operation is similar to the one described for the foregoing embodiments, both as regards the heat exchange mode and the thermal lamination condition which establishes itself.

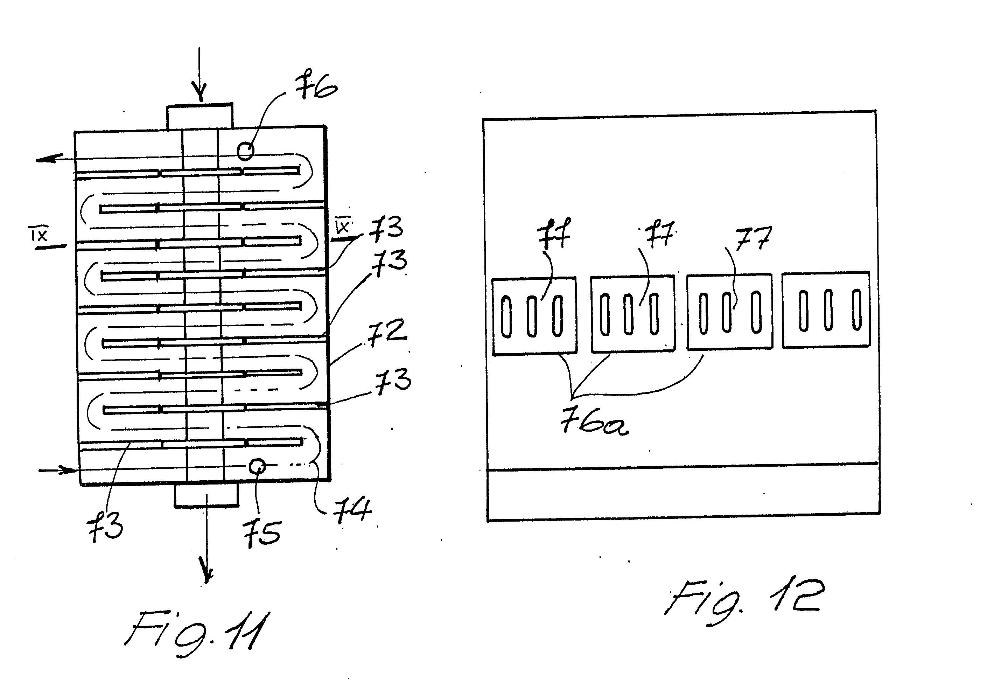

Figures 11,12 and 13 illustrate a second variation of the accumulator shown in Figure 4.

Also in this instance the reservoir, designated with the reference numeral 72, has a parallelepipedal configuration, although it may have any other desired shape, such as a cylindrical or prismatic one. This reservoir will also be thermally insulated.

Plates 73 are provided in the reservoir interior which extend over a portion of the reservoir internal cross-section. These plates are laid parallel and alternately offset, such as to provide a path composed of a succession of S-like portions as indicated by the arrow 74. This path enables, as mentioned hereinabove, a lamination of the working water, which water is admitted through a lower conduit 75 and is picked up for utilization through an upper conduit 76. The plates 73 have holes 76a formed through their middle zone which may have, for example, a square shape. These holes are aligned together.

Through each of said holes, which are aligned together substantially along a vertical direction, there is inserted a radiating exchange element 77 comprising a plurality of vertical conduits 78, preferably corrugated and having their ends interconnected by heads 79 wherethrough they are fed with the hot fluid. Said conduits 78 have small transverse connecting plates 80 so positioned as to provide continuity with the plates 73 upon insertion of a radiating element 77 into the reservoir 72. Also in this case, the hot fluid flows from top to bottom of the reservoir, following a crossflow path relatively to the thermal lamination flow within the reservoir, as well as to the flow of the working liquid which coincides after all with the lamination flow.

Evidently, all the piping and passage cross-sections for the hot primary fluid, or storage fluid, or working fluid , will be suitably sized to fit the characteristics of the thermal streams and circuits. Thus, it may be necessary to provide fluid circulating means for the various circuits and control means of the type usually employed in the art. If required, an independent circulation pump may have to be provided which would be automatically controlled upon the water being not drawn upwards by the utilization or working circuit, and the heating circuit becoming operative, to return the working water to the vessel bottom.

As already described hereinabove and neglecting as a first approximation the heat lost to the outside, which loss can be at least reduced through an appropriate selection of the reservoir dimensions and thermal insulation, there is formed after a while within the reservoir a temperature gradient or lamination which is closely related to the crossflows and their temperatures. This lamination exhibits, in detail, the following zones:

a) an upper zone at a high temperature which is appreciably the same for both fluids as the inlet temperature of the heating fluid;

b) an intermediate zone whereat a thermal exchange occurs through the conduit walls between the hot

downflow which undergoes a cooling action, and the upflow which undergoes heating; and

c) a lower cold zone, whereat the downflow has already delivered all its heat, thereby the two fluids are substantially at the same low temperature. It will be appreciated that if at any given moment after said zones have established themselves hot water begins to be withdrawn, the latter will be supplied at its highest temperature because picked up from the hot zone; the latter zone will then decrease, while the intermediate zone moves upwards and the lower zone increases.

If by contrast the demand decreases, the operation will reverse itself, with the upper zone increasing, while the intermediate one moves downwards and the lower one decreases. It should be noted that by reversing the directions of the flows and the temperatures within the two circuits, it becomes possible to provide a "cold storage accumulator", which may find useful application in several cases contemplating refrigerating or conditioning installations.

Of course, many modifications may be made to the embodiments described hereinabove without departing from the scope of this invention as more fully defined in the appended claims.

CLAIMS

1. A thermal accumulator of the type comprising a reservoir (1) filled with a fluid and being thermally insulated, characterized in that it further comprises at least one partition (12) dividing the reservoir (1) interior to provide a confined path (13) for the upflowing fluid as well as to inhibit the fluid convective and stirring movements while retaining a condition of thermal lamination of the fluid, said partitioned reservoir (1) being in turn connected to a utilization circuit (3) in such a manner that the fluid is picked up from the upper portion of said reservoir (1) and reintroduced into the lower portion of said reservoir (1), and to a heating circuit (2) associated with a heat source (4), said heating circuit (2) withdrawing cold fluid from the reservoir bottom and reintroducing the withdrawn fluid into the reservoir top subsequently to the heating thereof.

2. A thermal accumulator according to Claim 1, characterized in that said utilization circuit (3) and heating circuit (2) are in mutual communication through said reservoir (1).

3. A thermal accumulator according to Claim 2, characterized in that it comprises a plurality of partitions (12) having a slightly smaller size than the inside cross-sectional area of said reservoir (1) and being arranged parallel to one another at alternate locations, such as to create an S-like path (13) extending from the bottom to the top of said reservoir.

4. A thermal accumulator according to Claim 2, characterized in that a single continuous partition (212) is provided to a helical pattern extending from the bottom up.

5. A thermal accumulator according to either Claim 2, 3 or 4, characterized in that said heating circuit (2), picking up fluid from the lower portion of said reservoir (1) and after heating said picked up fluid through said heat source being operative to reintroduce said fluid into the upper portion of said reservoir, includes a controlled circulation pump (7).

6. A thermal accumulator according to either Claim 2, 3 or 4, characterized in that said heat source (4) is an alternative and/or integrative energy recovery system.

7. A thermal accumulator according to Claim 1, characterized in that said utilization circuit (3) communicates directly with said reservoir (1), whereas said heating circuit (2) is simply passed through said reservoir (1).

8. A thermal accumulator according to Claim 7, characterized in that said reservoir (51) has a parallelepipedal shape and includes a plurality of substantially horizontal partitions (54) occupying almost the entire cross-sectional area thereof and being quinconcially arranged to define an S-like path (55) for said working fluid, said partitions (54) being in the form of plates laid horizontally and parallel to one another, said plates (54) leaving alternately on one side and the other an opening in the proximity of either opposed walls of said reservoir to create a continuous passageway (55) for the storage fluid following a pattern which may be likened to a continuous succession of "S's", said S-like path (55) being intersected by a coil pipe (59) extending through the middle portion of said reservoir and wherethrough there is circulated a fluid heated by the heat source (4) of said heating circuit (2).

9. A thermal accumulator according to Claim 8, characterized in that the thermal exchange between said coil pipe (59) and the fluid filling said reservoir (51) creates a lamination in three zones, namely an upper zone whereat the temperatures of said heating fluid and working fluid are high and appreciably equal to each other, an intermediate zone whereat said heated fluid delivers its thermal energy to a working fluid, and a lower zone whereat the two fluids have the same low temperature.

10. A thermal accumulator according to Claim 7, characterized in that said reservoir (68) is substantially cylindrical and the partition dividing said reservoir is substantially in the form of a cylindrical helix (69), said helical path being intersected by a coil pipe (71) traversing said path created by said helix at each turn thereof, through said helix (69) there being circulated a fluid heated by the heat source (4) of said heating circuit (2).

11. A thermal accumulator according to Claim 7, characterized in that said reservoir has a prismatic shape (72) and comprises a plurality of horizontal partition plates (73) arranged offset to define an S-like path (74), said partition plates (73) having holes (76a) aligned to create a vertical passageway wherethrough a preformed exchange element is inserted, said preformed exchange element comprising vertical pipes (78) associated with small horizontal plates (80), said small plates (80) having the same shape as said holes (76a) cut through said partition plates, whereto said small plates (73) impart continuity upon insertion.

12. A thermal accumulator according to either Claim 8 or 10, characterized in that said coil pipe (71) has a circular cross-sectional configuration, or alternatively a quadrangular cross-sectional configuration, and is provided with fins.

13. A thermal accumulator according to Claim 7, characterized in that it includes a plurality of heating circuits (2), each of said heating circuits being connected to different thermal energy sources (4).

14. A thermal accumulator according to Claim 7, characterized in that the flows of said fluids are reversed in direction to provide a cold storage accumulator.

Fig 1

Fig. 2

Fig.3

Fig.4

Fig.5

Fig.6

63 64

Fig. 7

65 66

Fig. 8

67

Fig. 9

Fig. 10

68

69

71

70

79

80

80

78

79

Fig. 13

Fig. 11

Fig. 12

0045481

0045481

# EUROPEAN SEARCH REPORT

**European Patent Office**

Application number

EP 81 10 5969

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | DE - A - 2 828 675 (HANSEN) <br> * Page 5, line 20 - page 6, line 21; figure * <br><br> -- | 1 | F 24 D 11/00 |
| | FR - A - 2 431 098 (SAINT GOBAIN) <br> * Page 2, lines 9-20; figure 1 * <br><br> -- | 1 | |
| | US - A - 4 172 491 (RICE) <br> * Column 2, line 62 - column 3, line 58; figure 1 * <br><br> -- | 1 | TECHNICAL FIELDS SEARCHED (Int. Cl.³) |
| | US - A - 4 077 464 (MOOG) <br> * Column 2, lines 34-50; figures 1,2 * <br><br> -- | 1,3 | F 24 D <br> F 24 J |
| | DE - A - 2 637 482 (THYSSEN) <br> * Page 7, line 25 - page 9, line 21; figures 1,2 * <br><br> -- | 1,3 | |
| | GB - A - 1 482 518 (EVANS) <br> * Page 3, lines 23-59; figure 3 * <br><br> ---- | 4 | CATEGORY OF CITED DOCUMENTS |

CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 10-11-1981 | WEIS |

EPO Form 1503.1   06.78